# EUROPEAN PATENT APPLICATION

(11) **EP 2 034 149 A1**
(43) Date of publication of application: **11.03.2009**
(21) Application number: 07745040.1
(22) Date of filing: 11.06.2007
(51) Int. Cl.: F01N 3/20, B01D 53/94, B01J 23/89, F01N 3/22, F01N 3/24

(54) **EXHAUST GAS PURIFYING APPARATUS AND EXHAUST GAS PURIFYING METHOD USING THE SAME**

(30) Priority: 15.06.2006 JP 2006166491
(71) Applicant: Toyota Jidosha Kabushiki Kaisha, Toyota-shi, Aichi 471-8571 (JP)
(72) Inventor: SUZUKI, Tadashi, Aichi-gun Aichi 480-1192 (JP); TAKAHASHI, Naoki, Aichi-gun Aichi 480-1192 (JP); HACHISUKA, Ichiro, Toyota-shi Aichi 471-8571 (JP)
(74) Representative: Kuhnen & Wacker
(86) International application number: PCT/JP2007/061751
(87) International publication number: WO 2007/145178

(57) **Abstract**

An apparatus for purification of exhaust gas comprises: an exhaust gas pipe (2) connected to an internal combustion engine (1); an upstream catalyst (3) arranged at the upstream side of an exhaust gas passage inside the exhaust gas pipe (2) ; a downstream catalyst (4) which is arranged at the downstream side of the exhaust gas passage inside the exhaust gas pipe (2), and on which nickel and/or iron is supported; and oxidizing gas supply means (5) which is connected to the exhaust gas pipe (2) between the upstream catalyst (3) and the downstream catalyst (4), and which supplies oxidizing gas into the exhaust gas pipe (2).

## Description

### Technical Field

The present invention relates to an apparatus for purification of exhaust gas and a method for purification of exhaust gas using the apparatus.

### Background of the Invention

Catalysts for purifying exhaust gas from a gasoline engine, such as so-called NOₓ storage catalysts and three-way catalysts, have been put into practical use. Among these catalysts, NOₓ storage catalysts generally have a function to store NOₓ included in exhaust gas from an internal combustion engine when the air-fuel ratio of the exhaust gas is a lean state, and to release the stored NOₓ for reduction when the air-fuel ratio of the exhaust gas from the internal combustion engine is a theoretical(stoichiometric) or rich state. Such catalysts also have the nature of storing sulfur (S) components, in addition to NOₓ, included in the exhaust gas in a form of sulfate. Being highly stable compared to NOₓ, and impossible to be released from a catalyst simply by shifting an air-fuel ratio of exhaust gas to rich state, such sulfur components are to be gradually accumulated in the catalyst in the course of use thereof. Then, as the amount of accumulated sulfur components is increased, the amount of NOₓ that the catalyst can store is decreased. Therefore, such a catalyst may have caused a problem that NOₓ storage capacity is decreased due to the accumulation of sulfur components (such a phenomenon has been referred to as "sulfur poisoning (S poisoning)").

Meanwhile, such a sulfur poisoned catalyst can release sulfur components in a form of sulfur oxides (SOₓ) when the temperature of the catalyst is raised and a rich atmosphere is provided. Therefore, it is possible to recover the NOₓ storage capacity of the catalyst. At the same time, SOₓ at a temperature in the desorption temperature range is to be emitted in a larger amount as the air-fuel ratio is approaching a rich state, and SOₓ is also to be emitted in an amount proportional to the amount of sulfur components attached to the catalyst. Therefore, a large amount of SOₓ is emitted in a regeneration process of the catalyst. Moreover, the emitted SOₓ and hydrogen in exhaust gas react with each other to generate a large amount of hydrogen sulfide (H₂S) , when an air-fuel ratio is rich state. Upon being released into the atmosphere, the generated H₂S having a strong odor (H₂S odor) gives out a stench. Hence, various apparatuses for purification of exhaust gas have been researched in order to perform exhaust gas purification while the generation of H₂S is restrained.

For example, Japanese Unexamined Patent Application Publication No. 2000-161107 (Document 1) describes an apparatus for purification of exhaust gas including: an exhaust gas pipe connected to an internal combustion engine; a small-sized three-way catalyst arranged at the upstream side, adjacent to the internal combustion engine, of the exhaust gas pipe; an NOₓ storage catalyst arranged at the downstream side of the exhaust gas pipe; and designated control means which controls release rate of sulfur components on the basis of the accumulated amount of sulfur components. Moreover, described is a method in which the apparatus is used to bring the air-fuel ratio of exhaust gas to the stoichiometric side under a predetermined condition, thereby the amount of SOₓ released from the catalyst at the downstream side is reduced, and furthermore the generation of H₂S is restrained.

Japanese Unexamined Patent Application Publication No. 2000-274232 (Document 2) describes an apparatus for purification of exhaust gas including: an exhaust gas pipe connected to an internal combustion engine; a small-sized three-way catalyst arranged at the upstream side of the exhaust gas pipe; an NOₓ storage catalyst arranged at the downstream side of the exhaust gas pipe; sulfur poisoning detection means which detects sulfur poisoning of the catalyst at the downstream side; and air-fuel ratio modulation means which modulates the air-fuel ratio in order to release stored sulfur components when the sulfur poisoning of the NOₓ storage catalyst is detected with the sulfur poisoning detection means. Moreover, described is a method in which the air-fuel ratio modulation means modulates the air-fuel ratio of exhaust gas around the standard rich air-fuel ratio in order to gradually release SOₓ when the sulfur poisoning of the NOₓ storage catalyst is detected, and thereby the temporary generation of H₂S in a large amount is restrained.

Moreover, Japanese Unexamined Patent Application Publication No. 2004-108176 (Document 3) describes an apparatus for purification of exhaust gas including: an exhaust gas pipe connected to an internal combustion engine; an upstream catalyst (start catalyst) arranged at the upstream side of the exhaust gas pipe; a downstream catalyst (NOₓ storage catalyst) arranged at the downstream side of the exhaust gas pipe; air-fuel-ratio enriching means which performs control for enriching the exhaust gas air-fuel ratio in the regeneration of the downstream catalyst from sulfur poisoning; lean-spike performing means which performs a lean spike on the exhaust gas with a fuel-rich air-fuel ratio; and lean spike control means which sets specific conditions for the lean spike on the basis of the amount of sulfur components attached. Moreover, described is a method in which SOₓ is gradually released by performing the lean spike with the control means at an appropriate timing, and thereby the amount of H₂S emission is reduced.

Japanese Unexamined Patent Application Publication No. 2001-82137 (Document 4) discloses an apparatus for purification of exhaust gas including: an exhaust gas pipe connected to an internal combustion engine; a small-sized three-way catalyst arranged at the upstream side, adjacent to the internal combustion engine, of an exhaust gas passage; an exhaust gas purification catalytic apparatus having an NOₓ storage catalyst arranged at the downstream side of the exhaust gas pipe as well as a three-way catalyst which is arranged in the downstream region of the NOₓ storage catalyst, and which is comprised a H₂S release inhibitor supported thereon, such as nickel, iron, palladium, manganese, zinc, cobalt and copper; air-fuel ratio modulation means which modulates an exhaust air-fuel ratio between rich and lean sides with reference to a substantially theoretical air-fuel ratio; and control means which actuates the air-fuel ratio modulation means according to a rate of releasing hydrogen sulfide from the NOₓ storage catalytic apparatus, which is estimated on the basis of the operation condition of the internal combustion engine. Furthermore, Japanese Unexamined Patent Application Publication No. 2001-70754 (Document 5) discloses an apparatus for purification of exhaust gas for a lean-burn internal combustion engine provided with: an exhaust gas pipe connected to the internal combustion engine; a small-sized three-way catalyst arranged at the upstream side, adjacent to the internal combustion engine, of the exhaust gas passage; and an exhaust gas purification catalytic apparatus having an NOₓ storage catalyst arranged at the downstream side of the exhaust gas pipe as well as a three-way catalyst which is arranged in a downstream region of the NOₓ storage catalyst, and which is provided with nickel oxide as an H₂S release inhibitor supported thereon. It is stated that, in the apparatuses for purification of exhaust gas described in Documents 4 and 5, while the generation of H₂S is restrained due to SOₓ release reduction caused by modulation of the exhaust gas air-fuel ratio between the rich side and the lean side under a predetermined condition, the emission of H₂S is restrained by storing H₂S with the catalyst arranged at the downstream side and provided with the H₂S release inhibitor supported thereon.

However, the apparatuses for purification of exhaust gas described in Documents 1 to 5 are not capable of rapidly shifting the air-fuel ratio of the exhaust gas flowing into the catalyst at the downstream side to a lean state. Accordingly, such apparatuses are unable to respond to a rapid change in the operation condition of an internal combustion engine, causing highly-concentrated H₂S to be temporarily emitted in some cases. Moreover, being provided for purifying the exhaust gas at the starting of the internal combustion engine, the catalysts arranged at the upstream side and used in the apparatuses for purification of exhaust gas described in Documents 1 to 5 basically have a compact shape and tend to be exposed to a high temperature. Thus, when the atmosphere of the exhaust gas is shifted to a lean state, noble metal grains are caused to grow under the high-temperature lean atmosphere, and thereby the catalytic function is deteriorated. For these reasons, with the upstream catalysts failing to fully function at the starting, the apparatuses for purification of exhaust gas described in Documents 1 to 5 do not sufficiently purify the exhaust gas in some cases. In addition, in some case where a NOₓ storage catalyst or a generally-called three-way catalyst is used in the place of the catalyst at the downstream side, for example, when a high-load operation is brought to a stop, sulfur components accumulated on the downstream catalyst are temporarily desorbed in a form of highly-concentrated H₂S, and thereby an exhaust odor is generated.

### Disclosure of the Invention

The present invention has been made in consideration of the above-described problems involved in the conventional techniques, an object of the present invention is to provide an apparatus for purification of exhaust gas in which the air-fuel ratio of exhaust gas flowing into a downstream catalyst can be rapidly shifted to a stoichiometric or lean state in accordance with changes in the operation condition of an internal combustion engine, in which the generation of H₂S can be reliably restrained, and further in which functional decline of an upstream catalyst at the starting of the internal combustion engine can be avoided because the upstream catalyst is sufficiently protected from sulfur poisoning and thermal deterioration under a high-temperature lean state. Another object of the present invention is to provide an method for purification of exhaust gas using the apparatus.

The present inventors have devoted themselves to keen studies for achieving the above object, and, as a result, they found the fact that it is possible to be able to rapidly shift the air-fuel ratio of the exhaust gas flowing into the downstream catalyst to a lean state in accordance with the change in the operation condition of an internal combustion engine, that it is possible to be able to reliably restrain the generation of H₂S, and that it is possible to prevent functional decline of the upstream catalyst at the starting by sufficiently protecting the upstream catalyst from sulfur poisoning and thermal deterioration under a high-temperature lean state, by using the following apparatus for purification of exhaust gas. The apparatus for purification of exhaust gas comprises: an exhaust gas pipe connected to an internal combustion engine; an upstream catalyst arranged at the upstream side of an exhaust gas passage inside the exhaust gas pipe; a downstream catalyst which is arranged at the downstream side of the exhaust gas passage inside the exhaust gas pipe, and on which nickel and/or iron is supported; and oxidizing gas supply means which is connected to the exhaust gas pipe between the upstream catalyst and the downstream catalyst, and which supplies oxidizing gas into the exhaust gas pipe. This discovery has led the inventers to complete the present invention.

Specifically, an apparatus for purification of exhaust gas of the present invention comprises:
an exhaust gas pipe connected to an internal combustion engine;
an upstream catalyst arranged at the upstream side of an exhaust gas passage inside the exhaust gas pipe;
a downstream catalyst which is arranged at the downstream side of the exhaust gas passage inside the exhaust gas pipe, and on which nickel and/or iron is supported; and
oxidizing gas supply means which is connected to the exhaust gas pipe between the upstream catalyst and the downstream catalyst, and which supplies oxidizing gas into the exhaust gas pipe.

The apparatus for purification of exhaust gas of the present invention preferably further comprises control means, wherein, when it is determined that the downstream catalyst has a bed temperature ranging from 400°C to 750°C, and that an air-fuel ratio of exhaust gas flowing into the downstream catalyst is in a rich state, said control means controls the air-fuel ratio to become in any one of a lean state and a stoichiometric state by temporarily supplying the oxidizing gas from the oxidizing gas supply means.

Preferably, in the apparatus for purification of exhaust gas of the present invention,
the internal combustion engine is an engine for an automobile, and
when the downstream catalyst has a bed temperature ranging from 400°C to 750°C, when the air-fuel ratio of exhaust gas flowing into the downstream catalyst is in a rich state, and in any one of cases where a speed of the automobile is 10 Km/h or below and where a number of engine revolutions is 1000 rpm or below, the control means controls the air-fuel ratio to become in any one of a lean state and a stoichiometric state by temporarily supplying the oxidizing gas from the oxidizing gas supply means.

Moreover, an method for purification of exhaust gas of the present invention is a method for purifying exhaust gas emitted from an internal combustion engine using an apparatus for purification of exhaust gas, said apparatus comprising:
an exhaust gas pipe connected to an internal combustion engine;
an upstream catalyst arranged at the upstream side of an exhaust gas passage inside the exhaust gas pipe;
a downstream catalyst which is arranged at the downstream side of the exhaust gas passage inside the exhaust gas pipe, and on which nickel and/or iron is supported; and
oxidizing gas supply means which is connected to the exhaust gas pipe between the upstream catalyst and the downstream catalyst, and which supplies oxidizing gas into the exhaust gas pipe.

Preferably, in the method for purification of exhaust gas of the present invention, when it is determined that the downstream catalyst has a bed temperature ranging from 400°C to 750°C, and that an air-fuel ratio of exhaust gas flowing into the downstream catalyst is in a rich state, the air-fuel ratio is controlled to become in any one of a lean state and a stoichiometric state by temporarily supplying the oxidizing gas from the oxidizing gas supply means.

Preferably, in the method for purification of exhaust gas of the present invention, the internal combustion engine is an engine for an automobile, and
when the downstream catalyst has a bed temperature ranging from 400°C to 750°C, when the air-fuel ratio of exhaust gas flowing into the downstream catalyst is in a rich state, and in any one of cases where the speed of automobile is 10 Km/h or below and where a number of engine revolutions is 1000 rpm or below, the air-fuel ratio is controlled to become in any one of a lean state and a stoichiometric state by temporarily supplying the oxidizing gas from the oxidizing gas supply means.

Although it is not clearly understood why the above-described objects are achieved by using the apparatus for purification of exhaust gas and the method for purification of exhaust gas of the present invention, the inventors estimate the reasons as follows. Firstly, in the present invention, the oxidizing gas supply means is connected between the upstream catalyst and the downstream catalyst, and thereby the oxidizing gas is allowed to be added between the upstream catalyst and the downstream catalyst. Thus, it is possible to rapidly shift the air-fuel ratio at the downstream side to a stoichiometric or lean state while the air-fuel ratio at the upstream side is maintained to be in a rich state. Since the air-fuel ratio of the downstream side can be rapidly shifted to a stoichiometric or lean state, when it becomes necessary to restrain the generation of H₂S due to, for example, a rapid change in the operation condition of the internal combustion engine, it is possible to reliably restrain the generation of H₂S by temporarily supplying oxidizing gas. Therefore, in the present invention, by preventing thermal deterioration of upstream catalyst in a high-temperature lean atmosphere while sufficiently avoiding sulfur poisoning of the upstream catalyst, it is possible to reliably restrain the generation of H₂S. Furthermore, in the present invention, adopting the oxidizing gas supply means, it is capable of sufficiently restraining the generation of H₂S without being affected by the oxygen storage capacity of the upstream catalyst.

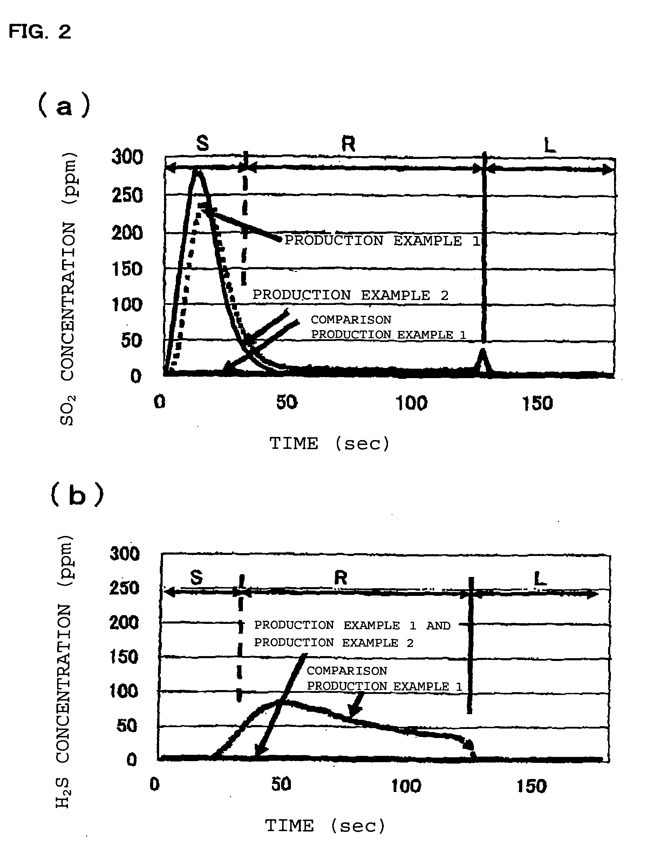

The downstream catalyst used in the present invention which is a catalyst on which nickel (Ni) and/or iron (Fe) is supported. Thus, it is possible to sufficiently desorb sulfur components in a form of SO₂ even when the air-fuel ratio is in a stoichiometric state (refer to Fig. 2) . When the air-fuel ratio is in a stoichiometric or lean state, the reaction between the desorbed SO₂ and hydrogen in exhaust gas is inhibited, and thereby the generation of H₂S originating from the desorbed SO₂ is also restrained. For this reason, when the air-fuel ratio of the exhaust gas flowing into the downstream catalyst is in a stoichiometric or lean state, it is possible to sufficiently restrain the generation of H₂S while the sulfur components are sufficiently desorbed in a form of SO₂. In the present invention, utilizing a combination of the oxidizing gas supply means and the downstream catalyst, it is possible to more reliably restrain the generation of H₂S in accordance with a rapid change in the operation condition.

In this section, discussed will be the case where a conventional apparatus for purification of exhaust gas adopts an automobile engine as an internal combustion engine. Accumulating, within a catalyst, sulfur components in exhaust gas at a low temperature, and desorbing the accumulated sulfur components under a high-temperature rich state in general, the downstream catalyst, which is often exposed to a low temperature of 500°C or below, tends to generate H₂S (exhaust odor). Especially, in the case where the operation condition rapidly changes, such as hill-climbing or high-speed driving following low-speed driving on city streets, the air-fuel ratio of the exhaust gas flowing into the downstream catalyst is rapidly shifted to a high-temperature rich state. As a result, exhaust odor is likely to be generated. Similarly, in the case where an automobile is brought to a stop after a short-term hill-climbing or high-speed driving, the air-fuel ratio of the exhaust gas flowing into the downstream catalyst is also rapidly shifted to a high-temperature rich state, and the flow rate of the exhaust gas becomes small, and further a state of the exhaust gas become in the state that is not diffused easily. Therefore, highly-concentrated H₂S tends to stay in one space, and thereby exhaust odor becomes significant. In such cases where a rapid change in the operation condition takes place, the conventional apparatus for purification of exhaust gas could not control the generation of H₂S. On the other hand, the apparatus for purification of exhaust gas of the present invention is capable of efficiently and rapidly shifting the air-fuel ratio at the downstream side to a stoichiometric or lean state by adding oxidizing gas between the upstream catalyst and the downstream catalyst even when it becomes necessary to restrain the generation of H₂S due to a rapid change in the operation condition. Thus, in the present invention, the generation of H₂S from the downstream catalyst can be reliably restrained.

While having a tendency of absorbing sulfur components with the bed temperature below 400°C regardless of introduction of oxidizing gas or the state of air-fuel ratio, a catalyst tends to complete desorbing sulfur components at temperatures over 750°C. For this reason, when a catalyst has a bed temperature outside of the range between 400°C and 750°C, it is likely that the catalytic effect is not improved so much even if oxidizing gas is introduced. Thus, in the case where it is determined that the downstream catalyst has a bed temperature ranging between 400°C and 750°C, and concurrently that the air-fuel ratio of the exhaust gas flowing into the downstream catalyst is in a rich state, it is likely that the generation of H₂S can be more efficiently restrained by the introduction of oxidizing gas.

Furthermore, in the case where an internal combustion engine is an automobile engine, and for example, where the speed of the automobile is rapidly reduced to 10 Km/h or below after high-speed driving, or where the number of engine revolutions is rapidly reduced to 1000 rpm or below from a high revolution number, the exhaust gas becomes to be in a high-temperature rich state, and to have a low flow rate. In such a condition, highly-concentrated H₂S is especially likely to be generated. Hence, in the present invention, when the bed temperature of the downstream catalyst is between 400°C and 750°C, the air-fuel ratio of the exhaust gas flowing into the downstream is in a rich state, and the speed of an automobile is 10 Km/h or below, or the number of the engine revolutions is 1000 rpm or below, it is possible to sufficiently restrain the generation of H₂S by supplying oxidizing gas between the upstream catalyst and the downstream catalyst in order to efficiently shift the air-fuel ratio at the downstream side to a stoichiometric or lean state.

According to the present invention, it is possible to provide an apparatus for purification of exhaust gas
in which the air-fuel ratio of exhaust gas flowing into a downstream catalyst can be rapidly shifted to a stoichiometric or lean state in accordance with changes in the operation condition of an internal combustion engine, in which the generation of H₂S can be reliably restrained, and further in which functional decline of an upstream catalyst at the starting of the internal combustion engine can be avoided because the upstream catalyst is sufficiently protected from sulfur poisoning and thermal deterioration under a high-temperature lean state. It is also possible to provide a method for purification of exhaust gas using the apparatus for purification of exhaust gas.

### Brief Description of the Drawings

Fig. 1 is a schematic drawing showing a preferred embodiment of an apparatus for purification of exhaust gas of the present invention, which is connected to an internal combustion engine.
Fig. 2 is graphs each showing a relationship between time and the amount of sulfur components desorbed from each of catalysts produced in production examples 1 and 2 and a comparison production example 1. Note that Fig. 2(a) is the graph showing the case where the sulfur component is SO₂ and Fig. 2 (b) is the graph showing the case where the sulfur component is H₂S.
Fig. 3 is a graph showing a relationship between temperature and the amount of sulfur components desorbed from the Pt/CZ+Fe catalyst (production example 2).
Fig. 4 is a graph showing a relationship between temperature and the amount of sulfur components desorbed from the Pt/CZ catalyst (comparison production example 1) .
Fig. 5 is a graph showing a relationship between the concentrations of H₂S and SO₂ included in exhaust gas measured in an example 1 and the state of air-fuel ratio of gas flowing into a downstream catalyst 4.
Fig. 6 is a graph showing a relationship between the concentrations of H₂S and SO₂ included in exhaust gas measured in an example 2 and the state of air-fuel ratio of gas flowing into the downstream catalyst 4.
Fig. 7 is a graph showing a relationship between the concentrations of H₂S and SO₂ included in exhaust gas measured in a comparison example 1 and the state of air-fuel ratio of gas flowing into the downstream catalyst 4.
Fig. 8 is a graph showing a relationship between the concentrations of H₂S and SO₂ included in exhaust gas measured in a comparison example 2 and the state of air-fuel ratio of gas flowing into the downstream catalyst 4.
Fig. 9 is a graph showing a relationship between the concentrations of H₂S and SO₂ included in exhaust gas measured in a comparison example 3 and the state of air-fuel ratio of gas flowing into the downstream catalyst 4.
Fig. 10 is a graph showing a relationship between the concentrations of H₂S and SO₂ included in exhaust gas measured in a comparison example 4 and the state of air-fuel ratio of gas flowing into the downstream catalyst 4.

### Detailed Description of the Preferred Embodiment

Hereinafter, a preferred embodiment of the present invention will be described in detail by referring to drawings. It should be understood that, in the following descriptions and drawings, the identical or corresponding elements are assigned to identical reference numerals, and redundant descriptions are omitted.

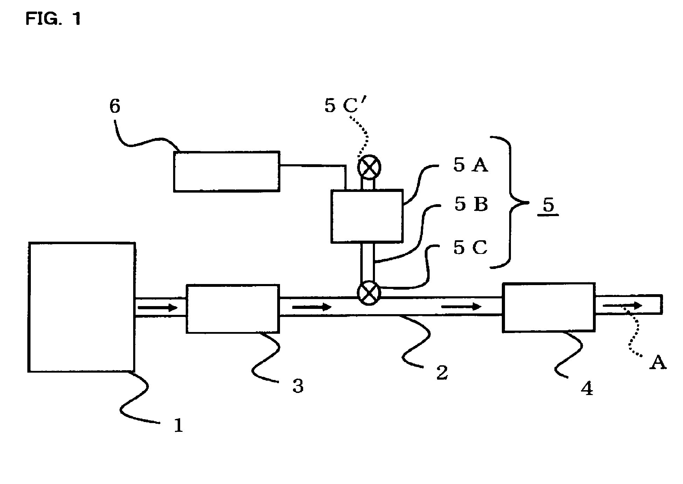

Fig. 1 is a schematic drawing showing a preferred embodiment of an apparatus for purification of exhaust gas of the present invention, which is connected to an internal combustion engine. This type of the apparatus for purification of exhaust gas generally comprises: an exhaust gas pipe 2 connected to an internal combustion engine 1; an upstream catalyst 3 arranged at the upstream side of an exhaust gas passage inside the exhaust gas pipe 2; a downstream catalyst 4 arranged at the downstream side of the exhaust gas passage inside the exhaust gas pipe 2; and oxidizing gas supply means 5 connected between the upstream catalyst 3 and the downstream catalyst 4. The apparatus for purification of exhaust gas of the embodiment comprises further: control means 6 which is electrically connected to the oxidizing gas supply means 5; and a temperature sensor (unillustrated) which is capable of measuring a bed temperature of the downstream catalyst. An arrow A in Fig. 1 indicates the direction in which exhaust gas flows.

The internal combustion engine 1 as described above is not particularly limited, and any known internal combustion engine may be accordingly adopted. For example, an automobile engine (such as a gasoline engine and diesel engine) may be adopted. Incidentally, in the case where such an internal combustion engine 1 is adopted, means for detecting a speed of automobile and a number of engine revolutions is not particularly limited, and any standard detecting means may be adopted.

Being located near the internal combustion engine 1, the upstream catalyst 3 according to the present invention is to be heated to reach an activation temperature in a short period of time on such an occasion as the starting of the internal combustion engine, and is to perform exhaust gas purification immediately after the starting of the internal combustion engine. Therefore, the upstream catalyst 3 may be a small-sized catalyst. Such an upstream catalyst 3 is not particularly limited, and any three-way catalyst or NOₓ storage catalyst may be adopted. It is preferable to adopt a three-way catalyst.

The downstream catalyst 4 according to the present invention is capable of serving as so-called an underfloor catalyst. Such a downstream catalyst 4 may be adopted a catalyst which stores NOₓ contained in inflow exhaust gas with an air-fuel ratio thereof in a lean state, and causes the stored NOₓ to react with reducing components (HC, CO) contained in exhaust gas for reduction purification with the air-fuel ratio of the inflow exhaust gas in a stoichiometric or rich state. A three-way catalyst, HC storage material, NOₓ storage material, each of which is commonly used, or the combination of such catalysts may also be adopted as the downstream catalyst 4.

The downstream catalyst 4 according to the present invention is a catalyst on which nickel and/or iron is supported. Having nickel and/or iron supported thereon, the downstream catalyst 4 can desorb sulfur components in a form of SOₓ when the air-fuel ratio is in a stoichiometric or lean state (refer to Fig. 2) . Therefore, in the present invention, the generation of H₂S can be restrained while sulfur components are sufficiently being desorbed, when the air-fuel ratio of the exhaust gas flowing into the downstream catalyst is in a stoichiometric or lean state.

Such a downstream catalyst 4 is not particularly limited, as long as the catalyst is provided with nickel and/or iron supported thereon. For example, three-way catalysts or NOₓ storage catalysts on which nickel and/or iron is supported may also be adopted. It is preferable that such a downstream catalyst 4 be a three-way catalyst on which nickel and/or iron is supported.

The amount of nickel and/or iron supported on the downstream catalyst 4 is not particularly limited; however, it is preferable that the amount be in a range between approximately 0 .02 mol and 0.5 mol per 1 liter of catalyst, and more preferably in a range between approximately 0.03 mol and 0.2 mol. When the amount of such nickel and/or iron is below the lower limit, it tends to be difficult to sufficiently desorb sulfur components in a stoichiometric or lean air-fuel ratio condition. On the other hand, when the amount of such nickel and/or iron exceeds the upper limit, it is likely that the nickel and/or iron react with a support and noble metal, or poison the surface of the support and noble metal, and thereby lower thermal resistance of the catalyst. As a result, catalytic activity is deteriorated. Note that, a method for providing nickel and/or iron supported on the catalyst is not particularly limited, and any known method may be adopted accordingly. For example, a supporting method through absorption of a nitrate solution may be adopted.

In the present invention, only the upstream catalyst 3 and the downstream catalyst 4 need to be provided as the catalysts. Moreover, an additional catalyst may be arranged behind (at the downstream side of) the downstream catalysis 4. With the additional catalyst arranged behind the downstream catalyst 4, purification of exhaust gas is likely to be performed more efficiently. Such a catalyst arranged behind the downstream catalyst 4 is not particularly limited; however, it is preferable that a three-way catalyst, a HC storage material or NOₓ storage material be adopted.

In the present invention, the above-described three-way catalyst which can be adopted as the catalysts, such as the upstream catalyst 3 and the downstream catalyst 4, may include, but not particularly limited to, for example, a catalyst comprising of an alumina support, a noble metal, and a base metal oxide may be adopted. Meanwhile, the above-described NOₓ storage catalyst may include, for example, a known NOₓ storage catalyst including a known support such as titania, alumina, silica, zirconia, ceria-zirconia and zirconia-titania which is supporting on a known NOₓ storage material such as an alkali metal, alkali earth metal and rare earth as well as a noble metal such as platinum and rhodium.

The shapes of the upstream catalyst 3 and the downstream catalyst 4 according to the present invention are not particularly limited, and can employ a shape such as a monolith catalyst of a honeycomb geometry and a pellet catalyst of a pellet geometry, respectively. The substrate used here is also not particularly limited. The substrates such as a particulate filter substrate (DPF substrate), monolithic substrate, pellet substrate and plate substrate, can be preferably adopted. The material of such substrates is also not particularly limited. For example, a substrate comprised a ceramic such as cordierite, silicon carbide and mullite, and a substrate comprised a metal such as stainless steel containing chromium and aluminum, can preferably adopted.

The oxidizing gas supply means 5 according to the present invention is not particularly limited as long as the means is capable of supplying oxidizing gas between the upstream catalyst 3 and the downstream catalyst 4. In this embodiment, the adopted oxidizing gas supply means 5 comprises an oxidizing gas supply pump 5A, an oxidizing gas supply pipe 5B, and an air intake bulb 5C. The configuration of such oxidizing gas supply means 5 is not particularly limited, and may be changed according to type of internal combustion engine, type of catalysts used, target amount of oxidizing gas supply, and the like. Such oxidizing gas supply means 5 is capable of controlling the air-fuel ratio at the downstream side by opening and closing the air intake bulb 5C with the control means which will be described later, and the like. The oxidizing gas here may be any gas including oxygen at 1 vol% or above, and, for example, air may be used. The position of the air intake bulb 5C is not particularly limited, and the air intake bulb 5C may be arranged at the position indicated by 5C' in Fig. 1.

Being connected between the upstream catalyst 3 and the downstream catalyst 4, the oxidizing gas supply means 5 is capable of rapidly shifting the air-fuel ratio of the exhaust gas flowing into the downstream catalyst 4 to a stoichiometric or lean state by temporarily supplying the oxidizing gas in accordance with the operation condition of the internal combustion engine and the like. For example, in the case where the internal combustion engine is an automobile engine, and where the driving condition is rapidly changed such as low-speed driving on city streets followed by hill-climbing or high-speed driving, it is possible to rapidly and efficiently shift the air-fuel ratio at the downstream side to a stoichiometric or lean state. Hence, when it becomes necessary to restrain the generation of H₂S, the air-fuel ratio at the downstream side is shifted to a stoichiometric or lean state, and thereby the generation of H₂S is reliably restrained.

The oxidizing gas supply pump 5A, which is to be selected according to the amount of exhaust gas from the internal combustion engine and the like, may be preferably a small-sized pump capable of supplying the oxidizing gas in an amount ranging from approximately 1 L/min to 500 L/min (more preferably from 10 L/min to 100 L/min). When engines respectively equipped with a turbocharger and supercharger is adopted, they may be used as the oxidizing gas supply pump 5A. In the present invention, the oxidizing gas supply means 5 is connected between the upstream catalyst 3 and the downstream catalyst 4, and thereby is capable of adding the oxidizing gas to the exhaust gas flowing into the downstream side. Accordingly, even when the oxidizing gas supply pump 5A is a small-sized pump or pipe, it is possible to rapidly shift the air-fuel ratio at the downstream side to a lean or stoichiometric state. Thus, it is possible to achieve the purpose of supplying oxidizing gas at low cost regardless of oxygen storage capacity of the upstream catalyst. For example, when the internal combustion engine is a 2.4-L automobile gasoline engine, the flow rate of exhaust gas at the engine revolutions of 1000 rpm is approximately 1200 L/min. Under the atmosphere including an excessive amount of reducing gas components by 1 vol%, the amount of oxidizing gas supply necessary to shift the downstream catalyst to a stoichiometric state is only 1/40 of the above-mentioned flow rate of exhaust gas. Thus, a small-sized pump with an approximately 30 L/min capacity can sufficiently demonstrate an effect of H₂S reduction. Incidentally, in such a case, it is also possible to lower the required supply pressure because of the low engine revolutions. The material, configuration, and other properties of the air intake bulb 5C are not particularly limited, and, for example, a bimetallic air intake bulb may be accordingly adopted.

The temperature sensor which is not shown in the figure is not particularly limited as long as it is capable of detecting the bed temperature of the downstream catalyst, and any known temperature sensor may be adopted accordingly. The temperature sensor to be used includes: for example, a sensor which is directly connected to the entrance, center, or exit of the downstream catalyst for direct temperature detection; and a sensor which detects the temperature indirectly according to the internal combustion engine 1 in terms of the number of engine revolutions, acceleration position, throttle position, torque, inlet flow, amount of fuel injection, and the like. The temperature sensor is electrically connected to the control means 6, which will be described later, and inputs the detected temperature data to the control means 6.

The control means 6 may include, but not particularly limited to, for example, an engine control unit (ECU). Such ECU is configured as a computer including a microprocessor and peripheral devices such as a ROM and RAM which are necessary for operation of the microprocessor.

The control means 6 is electrically connected to the oxidizing gas supply means 5, and thereby is capable of controlling the supply of oxidizing gas. As the control means 6, it is preferable to adopt control means which can control the air-fuel ratio to become in any one of a lean state and stoichiometric state by temporarily supplying the oxidizing gas from the oxidizing gas supply means when it is determine that the downstream catalyst has a bed temperature ranging from 400°C to 750°C (more preferably from 450°C to 700°C) , and that the air-fuel ratio of the exhaust gas flowing into the downstream catalyst is in a rich state.

When the downstream catalyst 4 has a bed temperature below 400°C, the downstream catalyst 4 is prone to absorb sulfur components regardless of the introduction of oxidizing gas or the state of air-fuel ratio. Therefore, even if the oxidizing gas is supplied, no sufficient effect is obtained. On the other hand, when the bed temperature of the downstream catalyst 4 exceeds 750°C, sulfur components are completely desorbed from the downstream catalyst 4. Thus, no effect of supplying the oxidizing gas is obtained.

In addition to determination on the bed temperature condition of the downstream catalyst 4 as described above, the control means 6 determines whether or not the air-fuel ratio of the exhaust gas flowing into the downstream catalyst 4 is in a rich state. The "rich state" referred herein indicates that the ratio of fuel to air is excessive. Any of the following methods for determining the air-fuel ratio of exhaust gas may be adopted: for example, a method
in which the oxygen concentration in exhaust gas is measured using a air-fuel-ratio sensor and the like to make the determination on the basis of the data obtained from the measurement; and a method in which a map of the relationship between the air-fuel ratio of exhaust gas and data on the number of engine revolutions, acceleration position, throttle position, torque, inlet flow, and amount of fuel injection, and the like is created in advance to make the determination, on the basis of the map, that the air-fuel ratio is in a rich state upon detecting that the data such as the number of engine revolutions reaches a certain value.

In the case where the control means 6 is used for the control, it is preferable that, for example, having an automobile engine as the internal combustion engine 1, the control means 6 controls the air-fuel ratio to become in any one of a lean and stoichiometric state by temporarily supplying the oxidizing gas from the oxidizing gas supply means when the downstream catalyst has a bed temperature ranging from 400°C to 750°C, when the air-fuel ratio of the exhaust gas flowing into the downstream catalyst is in a rich state, and in any one of cases where the speed of the automobile is 10 Km/h or below (more preferably 5 km/h), and where the number of engine revolutions is 1000 rpm or below. As described above, by introducing the oxidizing gas when the temperature is high, and the speed is low (10 km/h or below) or the number of revolutions is low (1000 rpm), both of which involve a small outlet flow, it becomes possible to restrain H₂S odor without causing any adverse affect on the exhaust capability, and, moreover, possible to demonstrate sufficient exhaust gas purification capability (NOₓ purification capability, for example) solely with the upstream catalyst 3.

### Examples

Hereinafter, the present invention will be described more specifically on the basis of examples and comparison examples. However, the present invention is not limited to the following examples.

### (Production example 1: Pt/CZ+Ni catalyst)

A Pt/CZ+Ni catalyst was produced with platinum and nickel supported on a support (CZ support) including a ceria-zirconia solid solution. To be more specific, the CZ support is a solid solution consisting primarily of ceria and zirconia including stabilizing agents, La₂O₃ and Pr₂O₃, at 3 mass% and 7 mass%, respectively (ceria content: 60 mass%, zirconia content: 40 mass%), and has a specific surface area of approximately 100 m²/g. A catalyst slurry was prepared by mixing the CZ support and an alumina sol. After being coated with the catalyst slurry, a honeycomb substrate composed of cordierite was calcined at 500°C to obtain a support-coated substrate. After provided with platinum through absorption, the support-coated substrate was calcined at 500°C, and then further provided with a nitrate solution of nickel through absorption, to obtain the Pt/CZ+Ni catalyst. The amount of platinum, CZ support, alumina sol, and nickel, included in the obtained catalyst was 0.03 g per 1 L of catalyst, 150 g per 1 L of catalyst, 20 g per 1 L of catalyst, and 0.05 mol per 1 L of catalyst, respectively.

### (Production example 2: Pt/CZ+Fe catalyst)

Except for using a nitrate solution of iron (Fe) in the place of a nitrate solution of nickel in the production example 1, the same process was adopted to obtain a catalyst (Pt/CZ+Fe catalyst) supporting platinum and iron on the CZ support. The amount of platinum, CZ support, alumina sol, and iron, included in the obtained catalyst was 0.03 g per 1 L of catalyst, 150 g per 1 L of catalyst, 20 g per 1 L of catalyst, and 0.05 mol per 1 L of catalyst, respectively.

### (Comparison production example 1: Pt/CZ catalysis)

Except for elimination of the process of providing with a nitrate solution of nickel through absorption in the production example 1, the same process was adopted to obtain a catalyst (Pt/CZ catalyst) supporting platinum on the CZ support for comparison of the downstream catalysts. The amount of platinum, CZ support, and alumina sol, included in the obtained catalyst was 0.03 g per 1 L of catalyst, 150 g per 1 L of catalyst, and 20 g per 1 L of catalyst, respectively.

### (Test example 1)

Characteristics of the catalysts obtained in the production examples 1 and 2 and the comparison production example 1 were examined in terms of desorption of sulfur components. To be more specific, firstly, each of the catalysts was arranged at a position of a downstream catalyst in a commercially-available 2.4 L-gasoline automobile. To expose the catalysts to sulfur poisoning, a lean-rich modulation pretreatment was performed under the condition in which the temperature of the downstream catalyst reached the highest of 800°C, and the automobile was driven once in the LA #4 mode test of the United States for approximately 20 minutes. Each of the sulfur-poisoned catalysts was taken out, and a portion with a diameter of 30 mm and a length of 50 mm was carved out from each of the sulfur-poisoned catalysts. At a constant catalyst bed temperature of 650°C, each of the carved catalyst portions was placed under a lean/rich modulation atmosphere, in which rich gas (2 minutes) consisting of C₃H₆ (0.1 vol%), SO₂ (0.03 vol%, H₂O (3 vol%), and N₂ (balance) as well as lean gas (1 minutes) consisting of O₂ (1 vol%), SO₂ (0.03 vol%), H₂O (3 vol%), and N₂ (balance) are alternately introduced in a three-minute cycle at a flow rate of 20 L/min. Sulfur components desorbed from each of the catalysts were measured. The relationship between time and the amount of desorbed sulfur components obtained in the measurement is shown in graphs in Fig. 2.

As clearly seen in the results illustrated in Fig. 2, it was confirmed that the Pt/CZ catalysts added with Ni or Fe (production examples 1 and 2) were capable of desorbing sulfur components in a form of SO₂ while each of the air-fuel ratios was maintained to be in a stoichiometric state due to OSC of the CZ support, and also confirmed that the desorption of sulfur components was further facilitated. On the other hand, with the Pt/CZ catalyst without Ni or Fe added (comparison production example 1), it was confirmed that no sulfur was desorbed when the air-fuel ratio was in a stoichiometric state, but it was confirmed that, when the air-fuel ratio was in a rich state, the sulfur components were desorbed in a form of H₂S.

### (Test example 2)

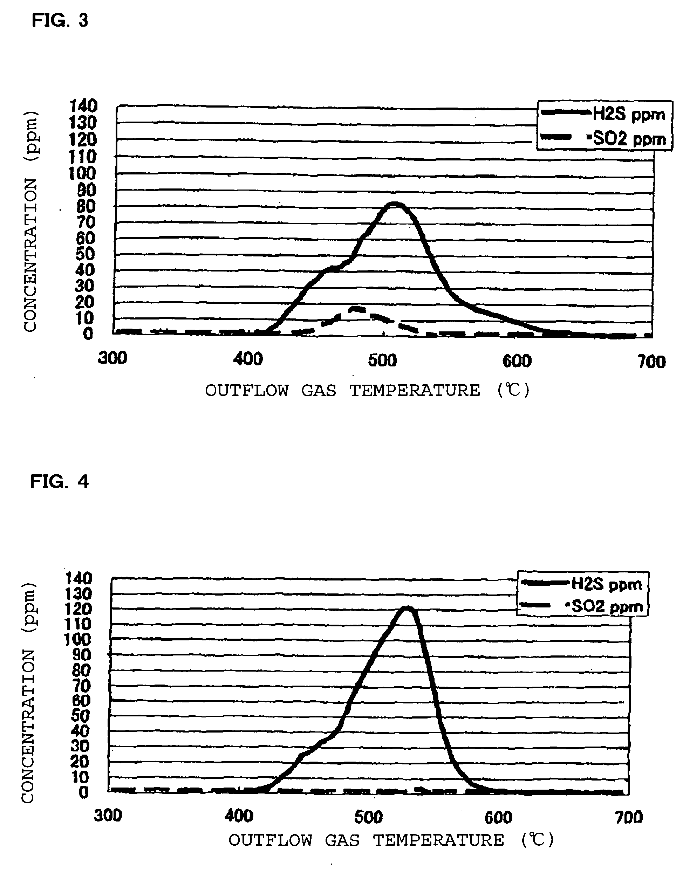

After the sulfur poisoning of the catalysts obtained in the production example 2 and the comparison production example 1, sulfur components were desorbed by raising temperature in a rich atmosphere. To be more specific, firstly, the temperature of inflow gas was raised to 780°C according to the timetable shown in Table 1. Then, a pretreatment (the treatment in processes of Nos. 0 to 24 in Table 1) in a rich-model exhaust gas atmosphere at a flow rate of 40 L/min. Subsequently, a sulfur poisoning test (processes of Nos. 25 to 50 in Table 1) was performed
in which a cycle of lean-, stoichiometric-, and rich-model-exhaust gas atmospheres was repeated a total of four times at the temperature of the inflow gas of 430°C. After that, under an atmosphere in which the flow rate of rich gas consisting of H₂ (0.1 vol%), CO (0.3 vol%), H₂O (9.95 vol%), CO₂ (10 vol%), and N₂ (balance) was set to be 25 L/min, the amount of desorbed sulfur components was measured while the temperature was raised between 430°C and 780°C at a rate of 30°C/min. The relationship between temperature and the amount of sulfur components desorbed from the Pt/CZ+Fe catalyst (production example 2) obtained from the measurement is shown in a graph in Fig. 3, and the relationship between temperature and the amount of sulfur components desorbed from the Pt/CZ catalyst (comparison production example 1) is shown in a graph in Fig. 4.

**[Table 1]**

| Process No. | Elapsed time | Time | Inflow gas temper ature | Total flow rate | CO2 | CO | SO2 | H2 | O2 | H2O |
|---|---|---|---|---|---|---|---|---|---|---|
| | (sec) | (sec) | (°C) | (L/min) | (vol%) | (vol%) | (vol%) | (vol%) | (vol%) | (vol%) |
| 0 | 0 | 0 | 50 | 40 | 10 | 0 | 0 | 0 | 0 | 5 |
| 1 | 30 | 30 | 780 | 40 | 10 | 0 | 0 | 0 | 0 | 5 |
| 2 | 620 | 590 | 780 | 40 | 10 | 0 | 0 | 2 | 0 | 5 |
| 3 | 1220 | 600 | 780 | 40 | 10 | 0 | 0 | 2 | 0 | 5 |
| 4 | 1221 | 1 | 780 | 40 | 10 | 0 | 0 | 2 | 0 | 5 |
| 5 | 1235 | 14 | 780 | 40 | 10 | 0 | 0 | 2 | 0 | 5 |
| 6 | 1236 | 1 | 780 | 40 | 10 | 0 | 0 | 0 | 1 | 5 |
| 7 | 1250 | 14 | 780 | 40 | 10 | 0 | 0 | 0 | 1 | 5 |
| 8 | 1251 | 1 | 780 | 40 | 10 | 0 | 0 | 2 | 0 | 5 |
| 9 | 1265 | 14 | 780 | 40 | 10 | 0 | 0 | 2 | 0 | 5 |
| 10 | 1266 | 1 | 780 | 40 | 10 | 0 | 0 | 0 | 1 | 5 |
| 11 | 1280 | 14 | 780 | 40 | 10 | 0 | 0 | 0 | 1 | 5 |
| 12 | 1281 | 1 | 780 | 40 | 10 | 0 | 0 | 2 | 0 | 5 |
| 13 | 1295 | 14 | 780 | 40 | 10 | 0 | 0 | 2 | 0 | 5 |
| 14 | 1296 | 1 | 780 | 40 | 10 | 0 | 0 | 0 | 1 | 5 |
| 15 | 1310 | 14 | 780 | 40 | 10 | 0 | 0 | 0 | 1 | 5 |
| 16 | 1311 | 1 | 780 | 40 | 10 | 0 | 0 | 2 | 0 | 5 |
| 17 | 1325 | 14 | 780 | 40 | 10 | 0 | 0 | 2 | 0 | 5 |
| 18 | 1326 | 1 | 780 | 40 | 10 | 0 | 0 | 0 | 1 | 5 |
| 19 | 1340 | 14 | 780 | 40 | 10 | 0 | 0 | 0 | 1 | 5 |
| 20 | 1341 | 1 | 780 | 40 | 10 | 0 | 0 | 2 | 0 | 5 |
| 21 | 1355 | 14 | 780 | 40 | 10 | 0 | 0 | 2 | 0 | 5 |
| 22 | 1356 | 1 | 780 | 40 | 10 | 0 | 0 | 0 | 1 | 5 |
| 23 | 1370 | 14 | 780 | 40 | 10 | 0 | 0 | 0 | 1 | 5 |
| 24 | 1380 | 10 | 780 | 40 | 10 | 0 | 0 | 0 | 0 | 5 |
| 25 | 1410 | 30 | 430 | 40 | 10 | 0 | 0 | 0 | 0 | 5 |
| 26 | 1700 | 290 | 430 | 40 | 10 | 0 | 0 | 0 | 0 | 5 |
| 27 | 1710 | 10 | 430 | 40 | 10 | 0 | 0.001 | 0 | 0.05 | 5 |
| 28 | 1740 | 30 | 430 | 40 | 10 | 0 | 0.001 | 0 | 0.05 | 5 |
| 29 | 1750 | 10 | 430 | 40 | 10 | 0 | 0.001 | 0.1 | 0.05 | 5 |
| 30 | 1985 | 235 | 430 | 40 | 10 | 0 | 0.001 | 0.1 | 0.05 | 5 |
| 31 | 1995 | 10 | 430 | 40 | 10 | 0 | 0.001 | 0.1 | 0 | 5 |
| 32 | 2025 | 30 | 430 | 40 | 10 | 0 | 0.001 | 0.1 | 0 | 5 |
| 33 | 2035 | 10 | 430 | 40 | 10 | 0 | 0.001 | 0 | 0.05 | 5 |
| 34 | 2065 | 30 | 430 | 40 | 10 | 0 | 0.001 | 0 | 0.05 | 5 |
| 35 | 2075 | 10 | 430 | 40 | 10 | 0 | 0.001 | 0.1 | 0.05 | 5 |
| 36 | 2310 | 235 | 430 | 40 | 10 | 0 | 0.001 | 0.1 | 0.05 | 5 |
| 37 | 2320 | 10 | 430 | 40 | 10 | 0 | 0.001 | 0.1 | 0 | 5 |
| 38 | 2350 | 30 | 430 | 40 | 10 | 0 | 0.001 | 0.1 | 0 | 5 |
| 39 | 2360 | 10 | 430 | 40 | 10 | 0 | 0.001 | 0 | 0.05 | 5 |
| 40 | 2390 | 30 | 430 | 40 | 10 | 0 | 0.001 | 0 | 0.05 | 5 |
| 41 | 2400 | 10 | 430 | 40 | 10 | 0 | 0.001 | 0.1 | 0.05 | 5 |
| 42 | 2635 | 235 | 430 | 40 | 10 | 0 | 0.001 | 0.1 | 0.05 | 5 |
| 43 | 2645 | 10 | 430 | 40 | 10 | 0 | 0.001 | 0.1 | 0 | 5 |
| 44 | 2675 | 30 | 430 | 40 | 10 | 0 | 0.001 | 0.1 | 0 | 5 |
| 45 | 2685 | 10 | 430 | 40 | 10 | 0 | 0.001 | 0 | 0.05 | 5 |
| 46 | 2715 | 30 | 430 | 40 | 10 | 0 | 0.001 | 0 | 0.05 | 5 |
| 47 | 2725 | 10 | 430 | 40 | 10 | 0 | 0.001 | 0.1 | 0.05 | 5 |
| 48 | 2960 | 235 | 430 | 40 | 10 | 0 | 0.001 | 0.1 | 0.05 | 5 |
| 49 | 2970 | 10 | 430 | 40 | 10 | 0 | 0.001 | 0.1 | 0 | 5 |
| 50 | 3000 | 30 | 430 | 40 | 10 | 0 | 0.001 | 0.1 | 0 | 5 |
| 51 | 3010 | 10 | 430 | 25 | 10 | 0.3 | 0 | 0.1 | 0 | 9.95 |
| 52 | 3710 | 700 | 780 | 25 | 10 | 0.3 | 0 | 0.1 | 0 | 9.95 |
| 53 | 3740 | 30 | 780 | 25 | 10 | 0.3 | 0 | 0.1 | 0 | 9.95 |
| 54 | 3750 | 10 | 130 | 25 | 10 | 0.3 | 0 | 0.1 | 0 | 9.95 |
| 55 | 4050 | 300 | 130 | 25 | 10 | 0.3 | 0 | 0.1 | 0 | 9.95 |
| 56 | 4060 | 10 | 130 | 25 | 0 | 0 | 0 | 0 | 0 | 0 |
| 57 | 4080 | 20 | 130 | 25 | 0 | 0 | 0 | 0 | 0 | 0 |

As clearly seen in the results illustrated in Figs. 3 and 4, it was confirmed that, with the Pt/CZ+Fe catalyst supporting iron thereon (production example 2), the percentage of sulfur desorbed in a form of SO₂ was higher, and the sulfur was desorbed at a lower temperature.

According to the results from the test examples 1 and 2, it was confirmed that each of the Pt/CZ+Ni and Pt/CZ+Fe catalysts (production examples 1 and 2) supporting nickel and iron, respectively, could sufficiently desorb sulfur components in a form of SO₂ and restrain the generation of H₂S, when the air-fuel ratio was shifted to a stoichiometric or lean state in the temperature range from 400°C to 750°C. An additional test was conducted in which the temperature was once brought down to room temperature after the process No. 50 in Table 1, and raised again up to 1000°C at a rate of 30°C/min. Since no sulfur components are desorbed outside of the temperature range from 400°C to 750°C. It was also confirmed in the additional test that each of the Pt/CZ+Ni and Pt/CZ+Fe catalysts (production examples 1 an d 2) supporting nickel and iron, respectively, at a bed temperature ranging between 400°C and 750°C could more efficiently restrain the generation of H₂S when the air-fuel ratio was controlled to a stoichiometric or lean state.

### (Example 1)

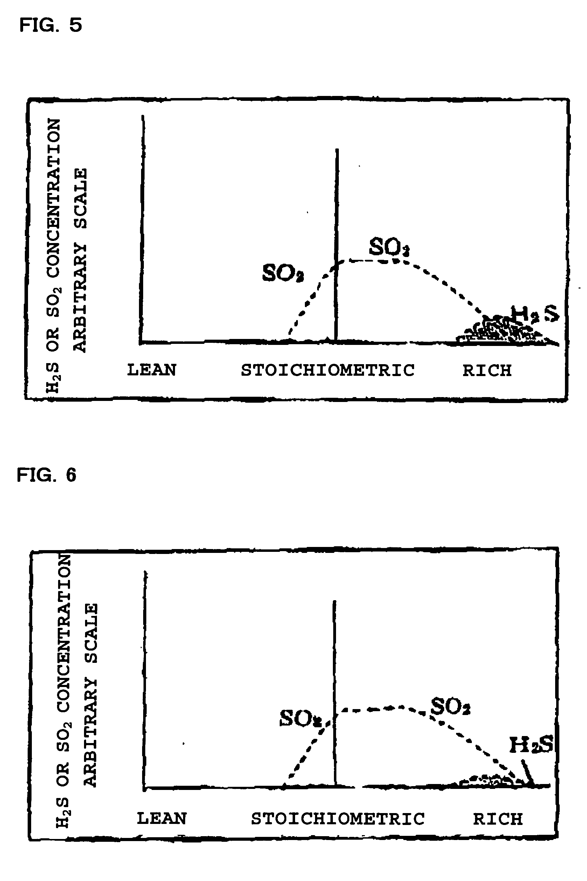

A model test was conducted in which an apparatus for purification of exhaust gas is provided to an exhaust system of an automobile equipped with a 2.4 L-gasoline engine. The concentrations of H₂S and SO₂ included in exhaust gas were measured. To be more specific, the apparatus for purification of exhaust gas having the configuration shown in Fig. 1 was adopted, which includes: a commercially-available three-way catalyst (Pt-Rh/ (alumina+CZ)catalyst) as the upstream catalyst 3; the Pt/CZ+Fe catalyst obtained in the production example 2 as the downstream catalyst 4; a small-sized pump capable of supplying gas at 30 L/min as the oxidizing gas supply pump 5A; a bimetallic air intake bulb as the air intake bulb 5C; and an ECU as the control means 6. A model test was conducted in which an automobile having the apparatus for purification of exhaust gas attached to the exhaust system of a 2.4 L-gasoline engine was driven on a turntable in the LA #4 mode test of the United States, accelerated to reach 90 km/h, and then brought to a stop. Thereafter, the concentration of H₂S and SO₂ included in exhaust gas were measured. During the measurement, the air-fuel ratio was controlled to become in a stoichiometric state by introducing air from the oxidizing gas supply means 5, when it is determined that the downstream catalyst had a bed temperature ranging from 400°C to 750°C, and that the air-fuel ratio of the exhaust gas flowing into the downstream catalyst 4 was in a rich state. As the result of the measurement, the relationship between the concentrations of H₂S and SO₂ included in the exhaust gas obtained from the measurement and the state of air-fuel ratio of the gas flowing into the downstream catalyst 4 is shown in a graph in Fig. 5. Note that the scales of concentration in the graphs in Figs. 5 to 10 are arbitrary, but the same thereamong.

### (Example 2)

Except for the downstream catalyst 4 replaced by the Pt/CZ+Ni catalyst obtained in the production example 1, the same model test as in the example 1 was conducted, and the concentrations of H₂S and SO₂ included in exhaust gas were measured. As the result of the measurement, the relationship between the concentrations of H₂S and SO₂ included in exhaust gas and the state of air-fuel ratio of the gas flowing into the downstream catalyst 4 is shown in a graph in Fig. 6.

### (Comparison example 1)

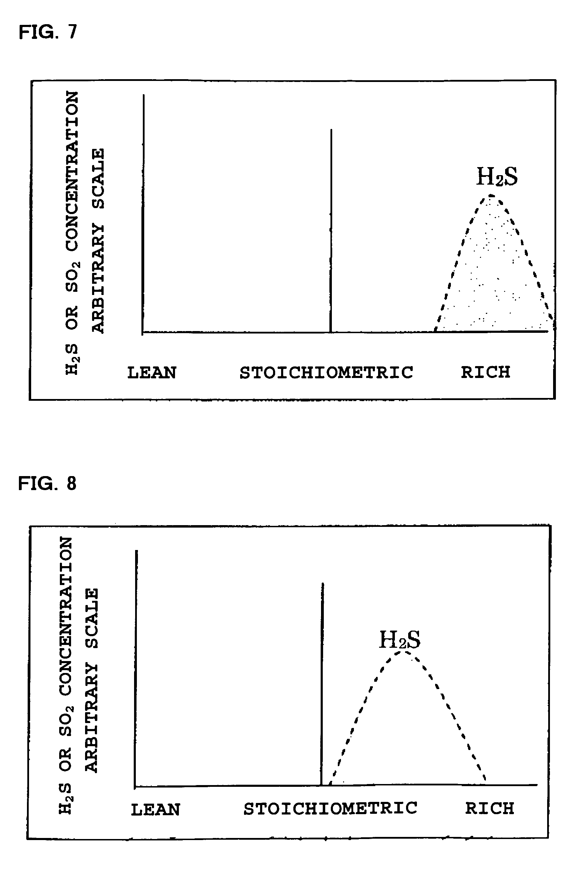

Except for the downstream catalyst 4 replaced by the Pt/CZ catalyst obtained in the comparison production example 1, the same model test as in the example 1 was conducted, and the concentrations of H₂S and SO₂ included in exhaust gas were measured. As the result of the measurement, the relationship between the concentrations of H₂S and SO₂ included in exhaust gas and the state of air-fuel ratio of the gas flowing into the downstream catalyst 4 is shown in a graph in Fig. 7.

### (Comparison example 2)

Except that no air was introduced from the oxidizing gas supply means 5 and that the state of air-fuel ratio of exhaust gas at the downstream side was not controlled, the same model test as in the comparison example 1 was conducted, and the concentrations of H₂S and SO₂ included in exhaust gas were measured. As the result of the measurement, the relationship between the concentrations of H₂S and SO₂ included in exhaust gas and the state of air-fuel ratio of the gas flowing into the downstream catalyst 4 is shown in a graph in Fig. 8.

### (Comparison example 3)

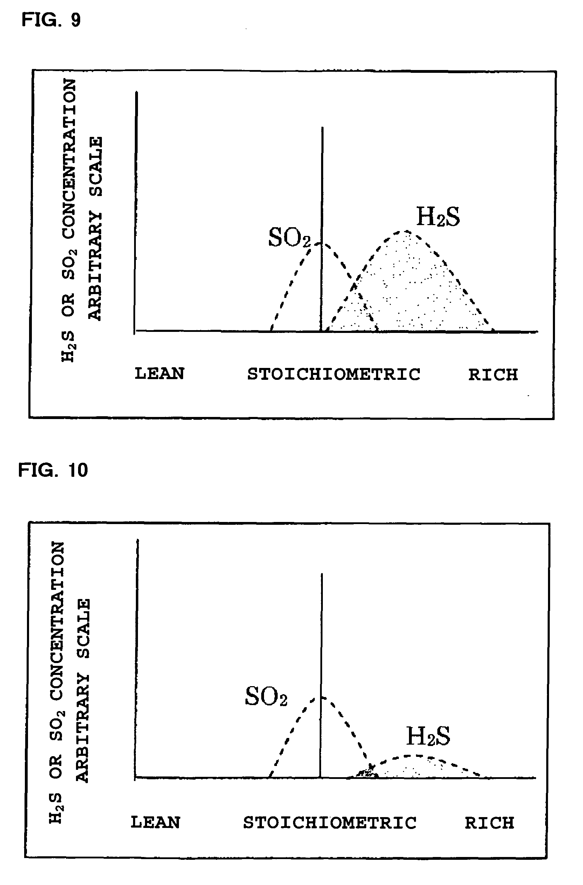

Except that no air was introduced from the oxidizing gas supply means 5 and that the state of air-fuel ratio of exhaust gas at the downstream side was not controlled, the same model test as in the example 1 was conducted, and the concentrations of H₂S and SO₂ included in exhaust gas were measured. As the result of the measurement, the relationship between the concentrations of H₂S and SO₂ included in exhaust gas and the state of air-fuel ratio of the gas flowing into the downstream catalyst 4 is shown in a graph in Fig. 9.

### (Comparison example 4)

Except that no air was introduced from the oxidizing gas supply means 5 and that the state of air-fuel ratio of exhaust gas at the downstream side was not controlled, the same model test as in the example 2 was conducted, and the concentrations of H₂S and SO₂ included in exhaust gas were measured. As the result of the measurement, the relationship between the concentrations of H₂S and SO₂ included in exhaust gas and the state of air-fuel ratio of the gas flowing into the downstream catalyst 4 is shown in a graph in Fig. 10.

As clearly seen in the result illustrated in Figs. 5 and 6, it was confirmed that the desorption of SO₂ became significant by controlling the air-fuel ratio of the inflow gas to become in a stoichiometric state, in the methods for purification of exhaust gas adopted in the examples 1 and 2. On the basis of this observation, it was verified that the generation of H₂S can be restrained in accordance with a rapid change in an operation condition by adopting the method for purification of exhaust gas of the present invention. In addition, since it was observed that sulfur components were sufficiently desorbed in a form of SO₂ in the methods for purification of exhaust gas in the examples 1 and 2, it is obvious that catalytic activity can also be regenerated.

On the other hand, as clearly seen in the results illustrated in Figs. 7 to 10, in the methods for purification of exhaust gas adopted in the comparison examples 1 to 3, it was confirmed that a large amount of H₂S was desorbed, and that the exhaust gas actually gave out H₂S odor. It was also confirmed that sulfur components could not be desorbed in a stoichiometric state in the apparatus for purification of exhaust gases adopted in the comparison examples 1 and 2. In the method for purification of exhaust gas adopted in the comparison example 4, although the amount of the generated H₂S was small, the amount of the overall sulfur components desorbed was small; thus, it was confirmed that sulfur components remained on the catalyst. In fact, there was a problem that catalytic activity could not be sufficiently demonstrated due to the residual sulfur components on the catalyst in the comparison example 4. These results suggested that, in the apparatus for purification of exhaust gas adopted in the comparison example 4, the CZ support was affected by sulfur poisoning when the gas atmosphere was in an oxidation state, and that the nickel formed Ni₃S₂ in a rich state resulting in sulfur staying on the catalyst.

### (Comparison example 5)

Except that an apparatus for purification of exhaust gas having a configuration in which the oxidizing gas supply means 5C was arranged at the inflow gas side of the upstream catalyst 3 was adopted, the same test as in the example 1 was conducted. The result showed that, compared to the example 1 in which the inflow gas (engine outflow gas) into the upstream catalyst was set to be in a rich state, the bed temperature of the upstream catalyst, after the rapid acceleration was brought to a stop, was higher by 50°C or above, and the bed temperature of the upstream catalyst reached to the highest among all the tests. As a result, thermal deterioration of the upstream catalyst was accelerated. It was confirmed that such thermal deterioration was involved in a decrease in W/U performance, which is a function of the upstream catalysis, at engine starting.

### (Reference example 1)

In the same model test driving as in the example 1, in which an automobile was rapidly accelerated to reach 90 km/h and then brought to a stop, the control requirement for air-fuel ratio was adjusted to allow the automobile to run, including a rapid acceleration stage, in a near-stoichiometric condition of the inflow gas (engine outflow gas) into the upstream catalyst, in order to promote the desorption of sulfur components, and the driving was performed. As the result of the driving, it was confirmed that a reduction of engine performance may occur.

### (Reference example 2)

A model driving test was conducted in which an automobile was rapidly accelerated at a greater speed than that in the example 1 in order to cause the bed temperature of the downstream catalyst to reach 780°C, and then brought to a sudden stop. In this model test, air was allowed to flow at 30 L/min between the upstream catalyst and downstream catalyst. As a result of the test, because the downstream catalyst was rapidly oxidized, the bed temperature of the downstream catalyst was raised by over 60°C compared to that in the case where no air was introduced from the gas supply means 5. Such a bed temperature rise could be a cause for progression of thermal deterioration of the downstream catalyst. Therefore, it was confirmed that there is a possibility that the thermal deterioration is caused by the bed temperature rise due to the rapid oxidization in the range of the catalyst bed temperature exceeding 750°C.

### Industrial Applicability

As described above, according to the present invention, it is possible to provide an apparatus for purification of exhaust gas in which the air-fuel ratio of the exhaust gas flowing into the downstream catalyst can be rapidly shifted to a stoichiometric or lean state in accordance with changes in the operation condition of the internal combustion engine, in which the generation of H₂S can be reliably restrained, and further in which functional decline of the upstream catalyst at the restarting can also be avoided because the upstream catalyst is sufficiently protected from sulfur poisoning. It is also possible to provide a method for purification of exhaust gas using the apparatus for purification of exhaust gas.

Hence, the apparatus for purification of exhaust gas of the present invention and the method for purification of exhaust gas using the apparatus are particularly useful as an exhaust gas purification system for purifying exhaust gas emitted from an internal combustion engine such as an automobile gasoline engine.

## Claims

1. An apparatus for purification of exhaust gas, comprising:
an exhaust gas pipe connected to an internal combustion engine;
an upstream catalyst arranged at the upstream side of an exhaust gas passage inside the exhaust gas pipe;
a downstream catalyst which is arranged at the downstream side of the exhaust gas passage inside the exhaust gas pipe, and on which nickel and/or iron is supported; and
oxidizing gas supply means which is connected to the exhaust gas pipe between the upstream catalyst and the downstream catalyst, and which supplies oxidizing gas into the exhaust gas pipe.

2. The apparatus for purification of exhaust gas according to claim 1, further comprising control means, wherein, when it is determined that the downstream catalyst has a bed temperature ranging from 400°C to 750°C, and that an air-fuel ratio of exhaust gas flowing into the downstream catalyst is in a rich state, said control means controls the air-fuel ratio to become in any one of a lean state and a stoichiometric state by temporarily supplying the oxidizing gas from the oxidizing gas supply means.

3. The apparatus for purification of exhaust gas according to claim 2, wherein
the internal combustion engine is an engine for an automobile, and
when the downstream catalyst has a bed temperature ranging from 400°C to 750°C, when the air-fuel ratio of exhaust gas flowing into the downstream catalyst is in a rich state, and in any one of cases where a speed of the automobile is 10 Km/h or below and where a number of engine revolutions is 1000 rpm or below, the control means controls the air-fuel ratio to become in any one of a lean state and a stoichiometric state by temporarily supplying the oxidizing gas from the oxidizing gas supply means.

4. A method for purification of exhaust gas emitted from an internal combustion engine using an apparatus for purification of exhaust gas, said apparatus comprising:
an exhaust gas pipe connected to an internal combustion engine;
an upstream catalyst arranged at the upstream side of an exhaust gas passage inside the exhaust gas pipe;
a downstream catalyst which is arranged at the downstream side of the exhaust gas passage inside the exhaust gas pipe, and on which nickel and/or iron is supported; and
oxidizing gas supply means which is connected to the exhaust gas pipe between the upstream catalyst and the downstream catalyst, and which supplies oxidizing gas into the exhaust gas pipe.

5. The method for purification of exhaust gas according to claim 4, wherein, when it is determined that the downstream catalyst has a bed temperature ranging from 400°C to 750°C, and that an air-fuel ratio of exhaust gas flowing into the downstream catalyst is in a rich state, the air-fuel ratio is controlled to become in any one of a lean state and a stoichiometric state by temporarily supplying the oxidizing gas from the oxidizing gas supply means.

6. The method for purification of exhaust gas according to claim 4, wherein
the internal combustion engine is an engine for an automobile, and
when the downstream catalyst has a bed temperature ranging from 400°C to 750°C, when the air-fuel ratio of exhaust gas flowing into the downstream catalyst is in a rich state, and in any one of cases where a speed of the automobile is 10 Km/h or below and where a number of engine revolutions is 1000 rpm or below, the air-fuel ratio is controlled to become in any one of a lean state and a stoichiometric state by temporarily supplying the oxidizing gas from the oxidizing gas supply means.
